# EUROPEAN PATENT SPECIFICATION

(11) **EP 0 213 623 B1**
(45) Date of publication and mention of the grant of the patent: **10.01.1996**
(21) Application number: 86112016.0
(22) Date of filing: 30.08.1986
(51) Int. Cl.: G11B 7/013

(54) **Optical disc recording and reproducing apparatus**
Wiedergabegerät für optische Platten
Appareil de reproduction à disques optiques

(30) Priority: 02.09.1985 JP 194120/85; 02.09.1985 JP 194121/85; 25.11.1985 JP 265574/85
(43) Date of publication of application: 11.03.1987
(73) Proprietor: SHARP KABUSHIKI KAISHA, Osaka (JP)
(72) Inventor: Maeda, Shigemi, Yamatokoriyama-shi Nara-ken (JP); Deguchi, Toshihisa Daiyahaisu Gakuenmae C-722, Nara-shi Nara-ken (JP); Yamaguchi, Takeshi, Tenri-shi Nara-ken (JP); Kobayashi, Shozou, Nara-shi Nara-ken (JP)
(74) Representative: Selting, Günther, Dipl.-Ing.

(56) References cited:
- EP-A- 0 044 072
- EP-A- 0 087 174
- EP-A- 0 126 682
- US-A- 4 425 637
- US-A- 4 516 235
- PATENT ABSTRACTS OF JAPAN vol. 9, no. 58 (P-341) 1781 14 March 1985 & JP-A-59 193 544
- PATENT ABSTRACTS OF JAPAN vol. 9, no. 129 (P-361) 1852 05 June 1985 & JP-A-60 13334
- PATENT ABSTRACTS OF JAPAN vol. 7, no. 176 (P-214) 1321 04 August 1983 & JP-A-58 80138
- PATENT ABSTRACTS OF JAPAN vol. 7, no. 286 (P-244) 1431 21 December 1983 & JP-A-58 161 160
- PATENT ABSTRACTS OF JAPAN vol. 10, no. 312 (P-509) 2368 23 October 1986 & JP-A-61 122 932
- PATENT ABSTRACTS OF JAPAN vol. 9, no. 227 (P-388)(1950) 13 September 1985 & JP-A-60 83234

## Description

The present invention relates to an optical disc recording and reproducing apparatus which forms bits corresponding to recording information on the disc by a laser beam to reproduce the record information through variation in the detection signals of the bits, as known from EP-A-0 126 682.

In recent years, an optical disc apparatus using laser beams has been used. In general, in an optical disc the recording density may be made as high as twice or more as compared with a magnetic disc, to compose a large capacity memory. The laser beam may be focused on the medium surface of the disc, and the positioning of the beam may be performed contactlessly by a pre-groove track in advance on the disc, so that recording medium may be removable.

The various apparatuses have differences in their recording and reproducing principle or differences in their light sources for recording/reproducing and erasing use or in their record medium. The optical disc apparatuses for information processing employ an optical disc medium which may be rewritten. For example, in the magneto optic disc apparatus, a semiconductor laser is used as the light source for recording, reproducing and erasing, a magnetic film is prepared by the evaporation or sputtering method on the disc as the record medium to record the information through the variation in the magnetizing direction in accordance with the information data.

In the conventional magneto optic disc apparatuses, the temperature of the magnetic film is locally raised as far as near the Curie point by the application of the recording laser beam with an output higher generally as used for reproducing. The magnetizing direction is varied by the application of the external magnetic field to effect the recording operation. In the digital information record, the reverse energy needed for reversing the magnetic polarity varies in accordance with the information data.

In the optical disc apparatus, the recording conditions vary corresponding to the record sensitivity which is different in each disc or in the recording position of the disc, corresponding to the change in the beam power of the laser element, and further corresponding to the change in the recording sensitivity by the ambient temperatures. As a result, due to variations of the record bit length, the desired recording density cannot be obtained.

Also, in the conventional data storing method to be used in the magneto optic disc apparatus, the record bit length along the disc rotating direction of the magnetized reversing portion formed on the disc is required to be strictly controlled. The factors dictating the record bit length are considered to be recording laser power and the recording sensitivity of the magnetic medium. The variation in recording laser power is caused by variations due to aging of the output characteristics of the semiconductor laser. Also, the recording sensitivity in the magnetic medium is difficult to be kept constant in the individual optical magnetic disc and has a certain variation width. Variations in the recording laser power and the recording sensitivity of the magnetic medium must be expected even during use, particularly by the ambient temperature of the optical magnetic disc apparatus.

The changes in the record bit length caused by the above-described variation cause a reduction in the tolerance with respect to the detection window width in the digital recording or the reduction of the signal-to-noise ratio by reducing the record bit length, thus resulting in a deterioration of the data error ratio in the worst condition.

EP-A-0 126 682 discloses an optical disc apparatus performing a trial phase in which a laser writes a string of pulses on an optical disc, said writing of pulses being effected with different output powers of the laser. Thereafter, the pulses are read by a reading device and pulses are produced, each of which corresponds to one of the registered bits. From the pulse width or from the duty ratio of the pulses an optimum laser output power is determined that causes the desired pulse width of the reading pulses. The value of the optimum power is stored in an electronic memory and is available during the recording use of the optical disc apparatus as a target value for the power control of the laser.

In Patent Abstracts of Japan: vol. 9, no. 58 (p-341) 1781 14 March 1985, JP-A-60.13.334 (Nippon Victor) a signal recording method for optical discs is disclosed wherein a test pattern waveform is recorded on the optical disc by gradually changing the amplification degree of an amplifier driving a laser. The test pattern written on the optical disc is scanned to obtain pulses. The maximum peak-to-peak value is obtained for the reproduced waveform and this maximum value is stored in a memory as the optimum value. Thereafter, the signal recording is started and the peak-to-peak values of the signal wave form obtained from a photodetector are compared with the value stored in the memory. The value obtained during recording is controlled so as to be equal to the value previously stored.

In the mentioned apparatuses, the optimum value that was determined during a trial or calibration phase is stored in a memory that is contained in the apparatus, and the calibration phase can be repeated as frequently as necessary during the process of registration. However, there is no relationship between different portions of the optical disc having different thermal or optical properties and data stored in the memory.

It is an object of the present invention to provide an optical disc apparatus provided with a record compensating system for controlling the variation in the recording laser beam, in which apparatus the reproduction bits can be analyzed for detecting the appropriate laser beam width without delaying or stopping the normal data recording operation.

This object is solved, according to the invention, with the features contained in claim 1.

The invention will be described hereafter in more detail with respect to the following description taken in conjunction with a preferred embodiment thereof and with reference to the accompanying drawings, in which;
Fig. 1 is a block circuit diagram showing the basic construction in the embodiment of the present invention;
Fig. 2 is a block diagram showing the construction of a pulse width variable circuit in the embodiment of Fig. 1;
Fig. 3 is a block diagram showing the construction of a pulse width discriminator in the embodiment of Fig. 1; and
Fig. 4 is a graph showing of the signal wave-forms generated in the embodiment of Fig. 1;

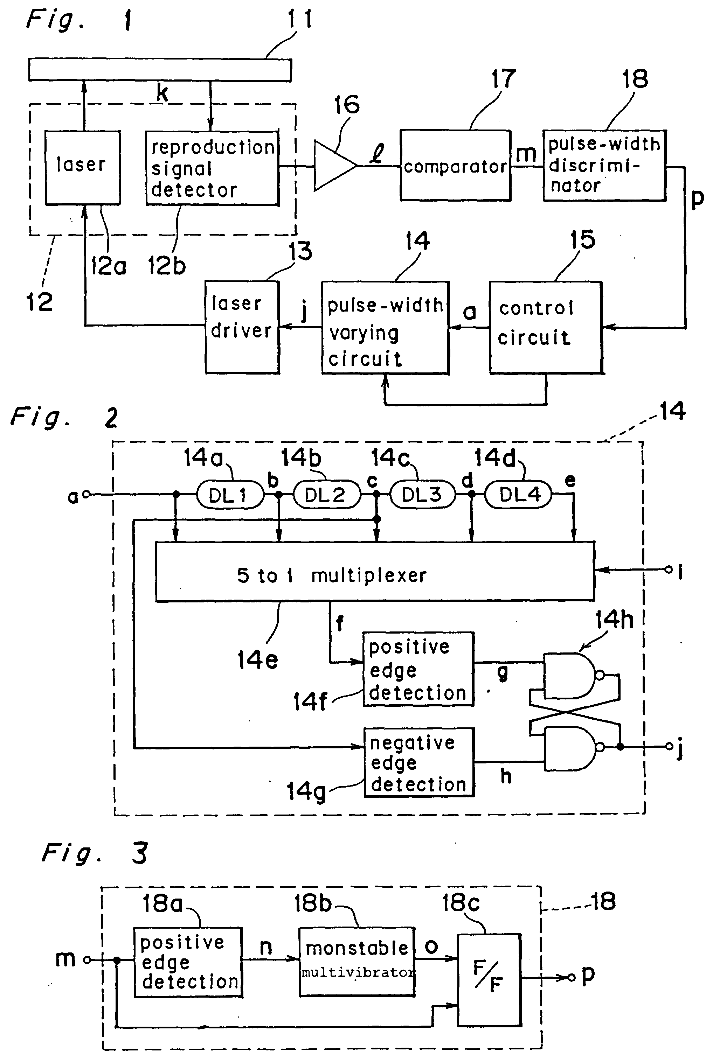

Fig. 1 shows the basic construction of the optical disc apparatus according to a preferred embodiment of the present embodiment. Reference character 11 is an optical disc corresponding to the one of the first embodiments. Reference character 12 is an optical pickup which is adapted to record and reproduce the information of the optical recording disc 11. The optical pickup 12 is composed of a laser 12a for generating the laser beam of the optional pulse width and a reproduction signal detector 12b. Reference character 13 is a laser driver for driving the laser 12a. Reference character 14 is a width varying circuit which feeds the driving signal to the laser driver 13 so as to generate the laser beams, by the optical pickup 12, different in pulse length sequentially with the constant frequency prior to the actual information recording. Reference character 15 is a controlling circuit which feeds a constant frequency of pulse signal to the pulse width varying circuit 14 and feeds the selecticn signal of the multiplexer to be described later. Reference character 16 is an amplifier for amplifying the output of the reproduction signal detector 12b. Reference character 17 is a comparator which slices in level the output of the amplifier 16 to output the pulse signal. Reference character 18 is a pulse width discriminator which discriminates the size relation between the pulse width of the pulse signal from the comparator 17 and a given value.

Fig. 2 shows the construction cf the pulse width varying circuit 14. Reference characters 14a, 14b, 14c, 14d are delay lines which delay the input signals respectively by time t to output them. The delay line 14a receives from the controlling circuit 15 a pulse signal of constant frequency and delays it for a time t to output it. The delay line 14b delays for a line 2t, the delay line 14c delays for a time 3t, the delay line 14d delays: for a time 4t. Reference character 14e is a multiplexer which selectively outputs, in accordance with the selection signal from the control circuit 15 the constant frequency cf pulse signals from the controlling circuit 5 and one of the pulse signals to be outputted from the delay lines 14a, 14b, 14c, 14d. Reference character 14f is a positive edge detecting circuit for detecting the rising edge of the output signal of the multiplexer 14e. Reference character 14g is a negative detecting circuit for detecting the falling edge of the output signal of the delay line 14b. Reference character 14h is a R-S flip-flop which is reset by the output of the positive edge detecting circuit 14f and is set by the output of the negative edge detecting circuit 14g.

Fig. 3 shows the construction of the pulse width discriminator 18. Reference character 18a is a positive edge detecting circuit for detecting the rising edge of the pulse signal from the comparator 17. Reference character 18b is a monostable multivibrator which outputs the reference pulse of a constant pulse width for each of the rising edges detected by the positive edge detecting circuit 18a. Reference character 18c is a flip-flop which samples the pulse from the comparator 17 by the rising edge of the reference pulse signal from the monostable multivibrator 18b. The flip-flop 18c is reversed in output by the size of the pulse width on the low-level side of the reference pulse as compared with the pulse width on the high-level side of the pulse from the comparator 17.

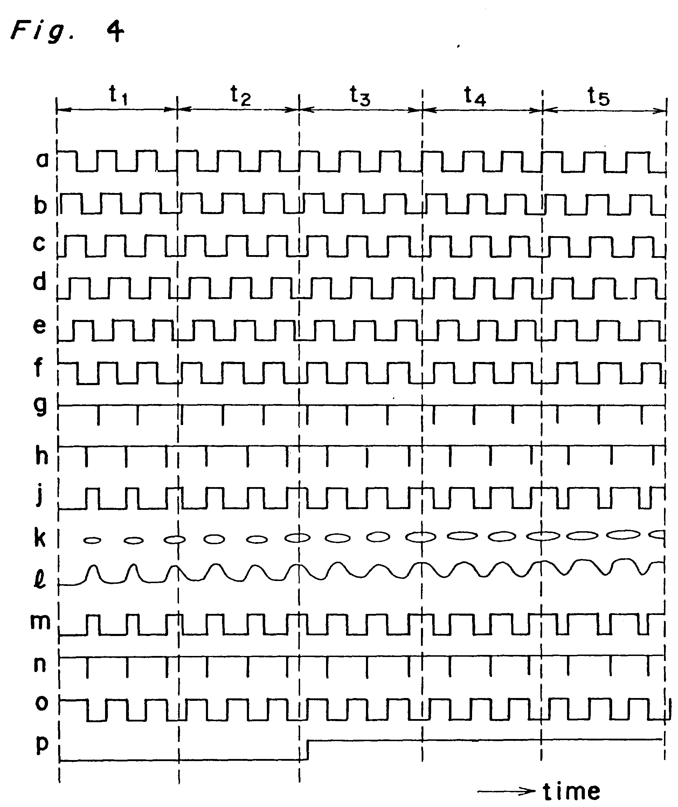

Fig. 4 shows the signal wave-forms generated at the various portions of the optical disc apparatus. Reference character a is a constant frequency of pulse signal which is fed to the pulse width varying circuit 14 from the controlling circuit 15. Reference characters b, c, d, e are outputs of the delay lines 14a, 14b, 14c, 14d respectively. Reference character f is the output of the multiplexer 45. Reference character g is an output of the positive edge detecting circuit 14f. Reference character h is an output of the negative edge detecting circuit 14g. Reference character j is an output of the R-S flip-flop 14h. Reference character K is a recorded bits of the optical record disc 11. Reference character ℓ is an output of the amplifier 16. Reference character m is an output of the comparator 17. Reference character n is an output of the positive edge detecting circuit 18. Reference character o is an output of the monostable multivibrator 18b. Reference character p is an output of the flip-flop 18c.

The operation of the optical disc apparatus in the embodiment will be described hereinafter.

The pulse signal a of a constant frequency from the controlling circuit 15 is fed to the pulse width varying circuit 14. In the pulse width varying circuit 14, the multiplexer 14e outputs a plurality of signals such as the pulse signal a to the period t1 in accordance with the selection signal from the controlling circuit 15, the pulse signal b which is delayed by time t from the pulse signal a to the period t2, the pulse signal c which is delayed by time 2t from the pulse signal a to the period t3, the pulse signal d which is delayed by time 3t from the pulse signal to the period t4, and the pulse signal e which is delayed by time 4t from the pulse signal a to the period t5 respectively. And the positive edge detecting circuit 14 outputs the short pulse g by the rise edge of the output signal f of the multiplexer 14e and the negative edge detecting circuit 14g outputs the short pulse h by the fall edge of the output signal of the delay line 14b.

Now, when the output signal a of the controlling circuit 15 is outputted as the output signal f from the multiplexer 14e by the selection signal i from the controlling circuit 15 in the period t1, the R-S flip-flop 14h is reset by the rise of the signal a and is set by the fall of the signal c delayed by time 2t from the pulse signal a, so that the output j of the R-S flip-flop 14h becomes a signal shcrt by 2t in the pulse width on the high-level side with respect to the signal a. As described hereinafter, the output j of the R-S flip-flop 14h becomes a signal, which is short by t in the pulse width on the high-level side with respect to the signal a by the signal b and the signal c which are delayed by t from the signal a in the period t2. In the period t3, the R-S flip-flop 14h is reset by the rise of the signal c and is set by the fall of the signal c, so that the output j becomes a signal of the high-level-pulse width which has no increase, decrease in the signal a. In the period t4, the output j becomes a signal which is long by t in the high-level pulse width with respect to the signal a by the signal d and the signal c delayed by 3t from the signal a. In the period t5, the output j becomes a signal which is long by 2t in the high-level pulse width with respect to the signal a by the signal e and the signal c delayed by 4t from the signal a. And the signal j of the high-level pulse width different respectively in the period t1, t2, t3, t4, t5 is sequentially fed to the laser driver 13. The laser driver 13 drives the laser 21a of the optical pickup 12 in accordance with this signal j so that the laser beam of the pulse width corresponding to the signal j is applied upon the rotating optical record disc 11. As a result, the recorded bit K which is different respectively in length in the periods t1, t2, --- t5 is formed on the optical record disc 11.

Then, the record bit K formed on the optical record disc 11 is detected by the reproduction signal detector 12b of the optical pickup 12, is amplified by the amplifier 16 and is converted into the signal ℓ. Thereafter, it is sliced in level by the comparator 17 so that the pulse signal m is provided. This pulse signal m is shortest in the period t1 in the pulse width on the high-level side, becomes sequentially longer as the period moves to the period t2, the period t3, ---, and becomes longest in the period t5. The pulse signal m has the rise edge detected by the positive edge detecting circuit 18a in the pulse width discriminator 18, the monostable multivibrator 18b is started by the detection signal n of the rising edge. As a result, a reference pulse signal o of a constant pulse width is outputted each time the rise edge of the pulse signal m is caused from the monostable multivibrator 18b.

In the periods t1 and t2, the duty of the pulse signal m is deviated, the high-level pulse width is shorter than the low level pulse width of the reference pulse signal o, so that the output p of the flip-flop 18c remains low in level.

Then, in the period t3, when the high-level pulse width of the pulse signal m becomes equal to the low level pulse width of the reference pulse signal o, the output p of the flip-flop 18c is reversed to the high level. Thereafter, in the period t4, t5, the high-level pulse width of the pulse signal m becomes longer than the low-level pulse width of the reference pulse signal o, so that the output p of the flip-flop 18c retains the high level.

The duty ratio of the pulse signal m, i.e., the reproduction signal in the period t3 during which the output p of the flip-flop 18c is reversed is 50%. This is because the pulse width of the laser beam is determined through the selection of the delay signal c in the pulse width varying circuit 14. Accordingly, it is judged that the pulse width of the laser beam is required to be set through the selection of the delay signal c in order to perform the optimum recording that the duty ratio of the reproduction signal is 50%. Thereafter, the actual information is recorded by the laser beam of the selected pulse width.

In this enbodiment, the decision is performed by the use of the pulse width on the side of the high level of the pulse signal m and the rising edge, but it may be performed by the use of the pulse width on the side of the low level of the pulse signal m and the falling edge. Furthermore, the higher precise setting of the pulse width of the laser beam may be performed if the decision is performed by the use of both the pulse widths on the side of the high level of the pulse signal m and on the side of the low level. As described hereinabove, in the embodiment of the present invention, the recording operation is performed while the pulse width of the laser beam being sequentially changed to select the pulse width of the laser beam when the pulse width of the reproduction signal becomes a given length. Thus, even if the recording sensitivity is different for each disc or the light power of the laser beam is varied in accordance with temperatures, the optimum recording conditions may be set under the condition of the disc and circumference conditions to be used to improve the reliability of the reproduction signal and to realize the higher density of the information record.

## Claims

1. Apparatus for recording information on an optical disc comprising
a laser beam generating means (12a) for generating a recording laser beam for recording information on an optical disc (11),
a recording means (13-16) which causes the laser beam generating means (12a), in a trial phase, to generate a recording laser beam with a sequentially varying parameter to form recording bits on the disc (11), and
a detecting means (18) which determines the value of said parameter of said recording laser beam at the time the width of the reproduction signal caused by reproduction of said recording bits becomes a predetermined length,
**characterized in**
- that said recording means (13-16) controls said laser beam generating means (12a) so as to generate recording laser beam pulse of a certain frequence and of variable pulse width, wherein the pulse width is gradually increased,
- that said detecting means (18) determines the width of the recording laser beam at the time that the pulse widths of reproducing signals for each of the recording bits recorded by means of the laser beam, becomes a predetermined length, and
- that said detecting means (18) includes a signal edge detecting means (18a) for detecting the edge of the rise or fall of the reproduction signal, a standard pulse generating means (18b) for outputting a standard pulse of said predetermined length upon starting every detection of the signal edge detecting means (18), and a polarity judging means (18c) for judging the polarity of the reproduction signal at the time of the following rise or fall of the standard pulse, whereby the information is recorded on the disc in accordance with the detected width of said laser beam detected by the detecting means.

2. The optical disc apparatus in accordance with claim 1, wherein the record bits are recorded on said disc (11) by said recording means (13-16) with a constant frequency.

## Patentansprüche

1. Vorrichtung zum Aufzeichnen von Information auf einer optischen Platte, mit
- einer Laserstrahlerzeugungseinrichtung (12a) zum Erzeugen eines Aufzeichnungs-Laserstrahls, um Information auf der optischen Platte (11) aufzuzeichnen,
- einer Aufzeichnungseinrichtung (13-16), die die Laserstrahlerzeugungseinrichtung (12a) in einer Versuchsphase dazu veranlaßt, einen Aufzeichnungs-Laserstrahl mit einem sequentiell variierenden Parameter zu erzeugen, um auf der Platte (11) Aufzeichnungs-Bits zu erzeugen, und
- einer Detektionseinrichtung (18), die den Wert des Parameters des Aufzeichnungs-Laserstrahls zu dem Zeitpunkt bestimmt, an dem die Breite des durch die Wiedergabe der Aufzeichnungs-Bits erzeugten Wiedergabesignals einen vorbestimmten Betrag annimmt,
**dadurch gekennzeichnet,**
- daß die Aufzeichnungseinrichtung (13-16) die Laserstrahlerzeugungseinrichtung (12a) derart steuert, daß ein Aufzeichnungslaserstrahl-Impuls mit einer bestimmten Frequenz und mit variabler Impulsbreite erzeugt wird, wobei die Impulsbreite graduell vergrößert wird,
- daß die Detektionseinrichtung (18) die Breite des Aufzeichnungs-Laserstrahls zu dem Zeitpunkt feststellt, an dem die Impulsbreiten der Wiedergabesignale für jede der mittels des Laserstrahls aufgezeichneten Aufzeichnungs-Bits einen vorbestimmten Betrag annehmen, und
- daß die Detektionseinrichtung (18) aufweist: eine Signalflankendetektionseinrichtung (18a) zum Detektieren der Anstiegs- oder Abfallflanke des Wiedergabesignals, eine Standardimpulserzeugungseinrichtung (18b) zum Ausgeben eines Standardimpulses mit der vorbestimmten Länge bei Start einer jeden Detektion durch die Signalflankendetektionseinrichtung (18a), und eine Polaritätsprüfeinrichtung (18c) zum Prüfen der Polarität des Wiedergabesignals zum Zeitpunkt des nachfolgenden Anstiegs oder Abfalls des Standardimpulses, wobei die Information auf die Platte entsprechend der von der Detektionseinrichtung detektierten Breite des Laserstrahls aufgezeichnet wird.

2. Optikplattenvorrichtung nach Anspruch 1, bei der die Aufzeichnungseinrichtung (13-16) die Aufzeichnungs-Bits mit einer konstanten Frequenz auf der Platte (11) aufzeichnet.

## Revendications

1. Appareil pour enregistrer des informations sur un disque optique, comprenant
un moyen générateur de faisceau laser (12a) destiné àgénérer un faisceau laser d'enregistrement pour enregistrer des informations sur un disque optique (11),
un moyen d'enregistrement (13-16) qui oblige le moyen générateur de faisceau laser (12a), au cours d'une phase d'essai, à générer un faisceau laser d'enregistrement ayant un paramètre qui varie séquentiellement pour former des bits d'enregistrement sur le disque (11), et
un moyen de détection (18) qui détermine la valeur dudit paramètre dudit faisceau laser d'enregistrement au moment où la largeur du signal de reproduction résultant de la reproduction desdits bits d'enregistrement atteint une longueur prédéterminée,
caractérisé en ce que
- ledit moyen d'enregistrement (13-16) commande ledit moyen générateur de faisceau laser (12a) afin qu'il génère une impulsion de faisceau laser d'enregistrement ayant une certaine fréquence et une largeur d'impulsion variable, la largeur d'impulsion étant progressivement augmentée,
- ledit moyen de détection (18) détermine la largeur du faisceau laser d'enregistrement au moment où les largeurs d'impulsions des signaux de reproduction correspondant à chacun des bits d'enregistrement enregistrés à l'aide du faisceau laser, atteignent une longueur prédéterminée, et
- ledit moyen de détection (18) comprend un moyen détecteur de flanc de signal (18a) destiné à détecter le flanc montant ou descendant du signal de reproduction, un moyen générateur d'impulsion standard (18b) destiné à délivrer en sortie une impulsion standard ayant ladite longueur prédéterminée au début de chaque détection du moyen détecteur de flanc de signal (18a), et un moyen de détermination de polarité (18c) destiné à déterminer la polarité du signal de reproduction au moment de la montée ou de la descente suivante de l'impulsion standard, pour qu'ainsi les informations soient enregistrées sur le disque en fonction de la largeur détectée dudit faisceau laser détecté par le moyen de détection.

2. Appareil pour disque optique selon la revendication 1, dans lequel les bits d'enregistrement sont enregistrés sur ledit disque (11) par ledit moyen d'enregistrement (13-16) avec une fréquence constante.
